# EUROPÄISCHE PATENTANMELDUNG

(11) **EP 1 091 546 A2**
(43) Veröffentlichungstag der Anmeldung: **11.04.2001**
(21) Anmeldenummer: 00121438.6
(22) Anmeldetag: 29.09.2000
(51) Int. Cl.: H04M 3/42, H04M 1/00

(54) **Verfahren zur Anzeige von Meldungen auf einem Teilnehmergerät**

(30) Priorität: 08.10.1999 DE 19948526
(71) Anmelder: Tenovis GmbH & Co. KG, 60326 Frankfurt (DE)
(72) Erfinder: Steuer, Manfred, 65719 Hofheim (DE)
(74) Vertreter: Wilhelm, Jürgen, Dipl.-Phys.

(57) **Zusammenfassung**

Zur Anzeige von Meldungen bei Teilnehmerendgeräten (100), die an einer Vermittlungsanlage (201) angeschlossen sind, wird entweder das Rufsignal moduliert oder es wird detektiert, ob der Ruf innerhalb einer vorgegebenen Zeit angenommen wurde.

Bei Detektion eines modulierten Rufsignals oder bei Nichtannahme des Rufes innerhalb der vorgegebenen Zeit erfolgt im Teilnehmerendgerät (100) ein Meldungsanzeige (181).

## Beschreibung

### Stand der Technik

Die Anzeige von Meldungen in Teilnehmerendgeräten, z.B. als Leistungsmerkmal 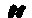 Message-Lamp" in Hotel-Vermittlungsanlagen, wurde bisher dadurch gelöst, daß eine 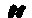 Message-Lamp" am Teilnehmerendgerät, insbesondere dem Fernsprechapparat, angeschlossen wurde und von einer von der Nebenstellenanlage (PABX) unabhängigen Einrichtung gesteuert wurde.

Eine weitere Realisierung des Leistungsmerkmals 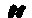 Message-Lamp" besteht darin, die Zuleitungsadern -a/b-Adern - zum Fernsprechapparat umzupolen und für diesen umgepolten Zustand eine Anzeige im Fernsprechapparat unter Einsatz einer Diode zu aktivieren. Nachteilig bei diesem Verfahren ist die Auslegung der Teilnehmerschaltung, da bei aktiver Anzeige ein Strom fließen muß, der unter der Schwelle des Erkennens des Abhebens des Handapparates ist. Den 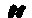 Message-Lamp"-Strom liefert die Teilnehmerschaltung; gesteuert wird mittels einer zusätzlichen Einrichtung mit einem Umpolrelais je Fernsprechapparat/"Message-Lamp". Bei digitalen und daher relativ teueren Fernsprechapparaten wird die 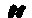 Message-Lamp" über den D-Kanal gesteuert.

### Vorteile der Erfindung

Mit den Maßnahmen der Ansprüche 1, 2 oder 13 ist es möglich, Meldungen bei Teilnehmerendgeräten ohne großen Zusatzaufwand anzuzeigen, unabhängig vom eingesetzten Teilnehmerendgerätetyp. Bei Endgeräten mit Display kann das Display zur Anzeige von Meldungen mitbenutzt werden. Bei der Realisierung nach der Erfindung läßt sich die 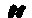 Message-Lamp"-Funktion in der Vermittlungsanlage auf einfach Art und ohne besonderen Aufwand integrieren. Bei der Realisierung gemäß Anspruch 1 wird das Rufsignal insbesondere in der Teilnehmerschaltung in der Vermittlungsanlage so moduliert, daß eine codierte Meldung im Rufsignal enthalten ist, die im Teilnehmerendgerät über sowieso vorhandene Komponenten - Rufsignalauswertung in Verbindung mit der Apparatesteuerung - auswertbar ist. Der Mehraufwand in der Teilnehmerschaltung ist relativ gering.

Bei der Realisierung gemäß Anspruch 2 ist nur im Teilnehmerendgerät eine geringfügige Modifizierung in der Ablaufsteuerung/Funktionasteuerung des Teilnehmerendgeräts notwendig. In der Teilnehmerschaltung der Vermittlungsanlage ist keine Änderung notwendig. Es ist hier weder eine Polaritätsumkehr noch eine Modifikation des Rufsignals notwendig. Allein aus der Rufsignalauswertung innerhalb einer vorgegebenen Rufzeit wird eine Steuerung für die 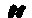 Message-Lamp" abgeleitet.

Zusätzliche Zuleitungen oder eine Meldungsübertragung im D-Kanal, die nur von modernen digitalen Teilnehmerendgeräten auswertbar ist, sind entbehrlich. Daher können auch einfache oder ältere Teilnehmerendgeräte mit den Maßnahmen der Erfindung aus-/nachgerüstet werden. Es ist hierzu lediglich eine geringfügige Änderung der Apparatesteuerung notwendig.

Bei der Ausgestaltung nach Anspruch 3 wird eine einfache Anzeigediode in das Teilnehmerendgerät integriert oder es erfolgt die Mitbenutzung des sowieso vorhandenen Anzeigendisplays des Teilnehmerendgerätes, was keinerlei Hardware-Mehraufwand erfordert. Bei der Ausgestaltung nach Anspruch 4 erfolgt eine periodische Ein-/Aussteuerung einer Meldungsanzeige (Blinkzustand). Dies erhöht einerseits die Aufmerksamkeit des Teilnehmers auf eine Meldungsanzeige und vermindert andererseits den Stromverbrauch für eine solche Anzeige.

In der Ausgestaltung nach Anspruch 5 wird aufgezeigt, wie eine aktivierte Meldungsanzeige auf einfache Weise deaktiviert werden kann.

Gemäß Anspruch 6 oder 7 kann bei aktivierter Meldungsanzeige und Abheben des Handapparates eine vorprogrammierte Rufnummer gewählt werden, um den zu rufenden Teilnehmer anzuzeigen, daß die Beantwortung einer Meldung vorliegt.

Durch die Rufweiterachaltung einer Meldungsanzeige zu einer Servicestelle bei aktivierter Meldungsanzeige kann der Ruf dort abgefragt werden und eine Nachricht hinterlegt werden, die dem Teilnehmerendgerät bei Abheben des Handapparates zugeleitet werden kann.

Um auszuschließen, daß bei jeder Durchwahlverbindung die Meldungsanzeige aktiviert wird, wird gemäß Anspruch 9 nur dann eine Meldung generiert, wenn keine Durchwahlverbindung zum Teilnehmerendgerät aufgebaut wird und der Ruf nicht innerhalb einer vorgegebenen Zeit angenommen wird.

Die Modulation des Rufsignals für eine Meldungsanzeige kann nach Anspruch 10 auf einfach Weise durch Austasten des Rufsignals erfolgen. Dazu ist lediglich ein gesteuerter Schalter in der Teilnehmerschaltung der Vermittlungsanlage notwendig.

Durch eine Mehrfachmodulation nach Anspruch 11 können unterschiedliche Arten von Meldungen zum Teilnehmerendgerät übertragen werden und dort voneinander unterscheidbar angezeigt werden.

Gemäß Anspruch 12 kann für die Anzeige von Meldungen bei Anzeigeeinrichtungen mit erhöhtem Stromverbrauch auf einfache Weise eine entsprechende Anpassung für die Rufsignalauswertung bei dem Teilnehmerendgerät und bei der Teilnehmerschaltung bezüglich des erforderlichen Ruhestroms durchgeführt werden.

### Zeichnungen

Anhand der Zeichnungen werden Ausfürungsbeispiele der Erfindung näher erläutert.

Es zeigen
Figur 1 die Anschaltung eines Teilnehmerendgerätes an die Teilnehmerschaltung einer Vermittlungsanlage,
Figur 2 eine Teilnehmerschaltung,
Figur 3 ein Blockschaltbild eines Teilnehmerendgerätes,
Figuren 4 und 5 Ablaufdiagramme für eine Rufauswertung und
Figur 6 Signalverläufe von modulierten Rufsignalen.

### Beschreibung von Ausführungsbeispielen

Bevor auf das Verfahren bzw. die Anordnung der Erfindung eingegangen wird, sollen zuvor konventionelle Lösungen erläutert werden, auf deren Baugruppen die erfindungsgemäße Lösung aufbaut.

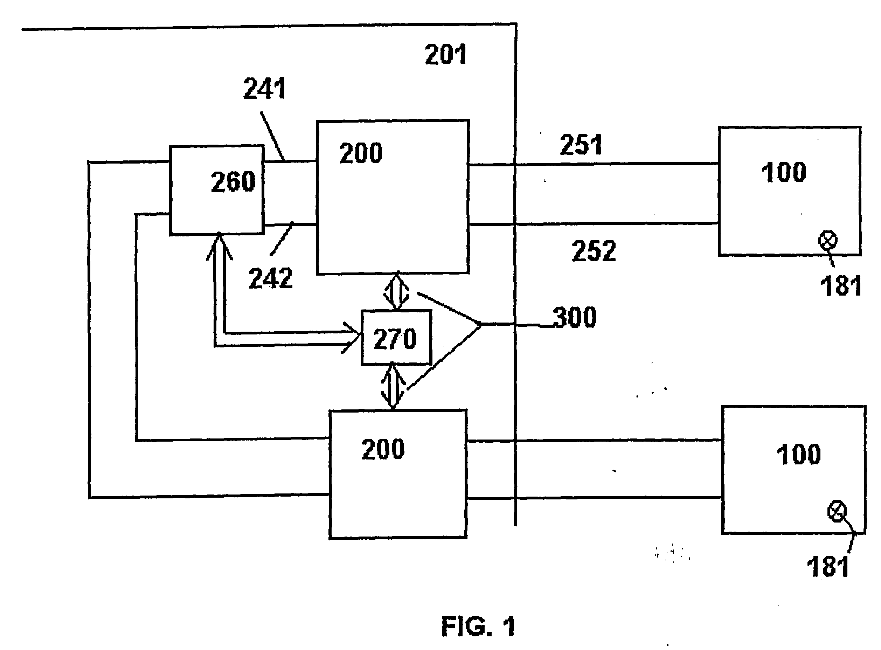

Wie Figur 1 zeigt, ist das Teilnehmerendgerät 100 mit der Anzeigeeinrichtung 181 für Meldungen ( 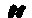 Message-Lamp") über das Fernsprechadernpaar 251 und 252 mit der Teilnehmerschaltung 200, die Bestandteil der Vermittlungsanlage 201 ist, verbunden. Die Sprachübertragung zum Koppelfeld 260 der Vermittlungsanlage 201 erfolgt über die Sprechadern 241 und 242. Die Steuerungsinformationen werden über Leitungen bzw. den Steuerbus 300 mit der Steuereinrichtung 270 der Vermittlungsanlage 201 ausgetauscht.

Nachfolgend wird zuerst eine konventionelle Lösung für die Teilnehmerschaltung 200 beschrieben, die vergleichbar aus elektronischen Komponenten (SLIC) für analoge und digitale Anwendungen bestehen kann. Für die digitalen Anwendungen sind zusätzliche AD-Wandler (COFI) vorgesehen, die integraler Bestandteil der Teilnehmerschaltung 200 sein können.

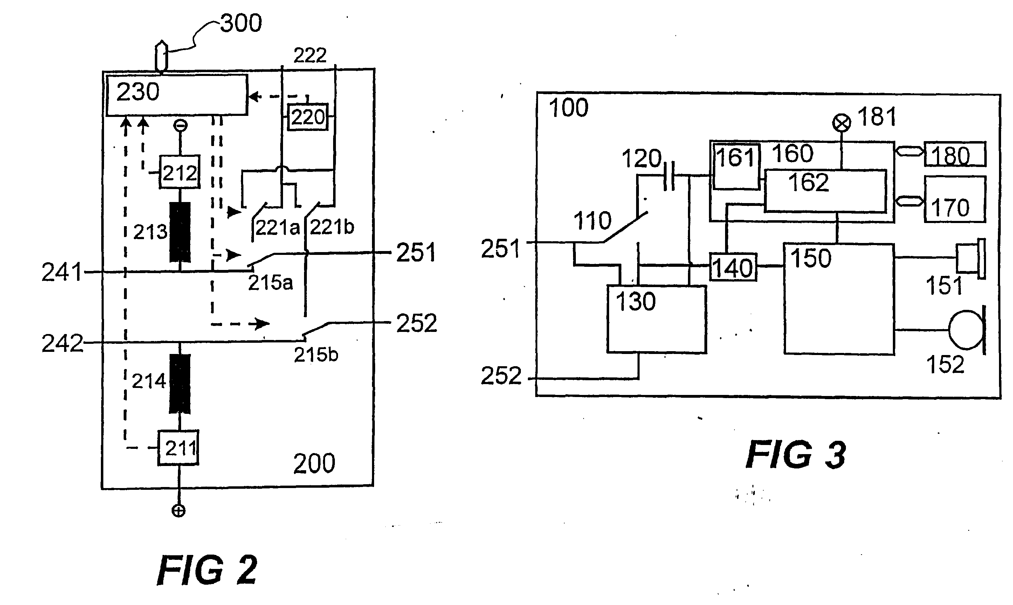

Gemäß Figur 2 wird das Teilnehmerendgerät 100 über die Teilnehmerschaltung 200 mit Schleifen- und Rufstrom über das Adernpaar 251 und 252 versorgt. Im Ruhe- und Gesprächszustand wird der Speisestrom über die von der Steuerung 230 der Teilnehmerschaltung 200 kontrollierten Schalter 215a und 215b eingespeist, und zwar über die Impedanzstufen 213 und 214, die an der Speisespannung (+ - und - -Pol) liegen. Die Stromdiskriminatoren 211 und 212 überwachen den Speisestrom und erkennen z.B. Abheben, Einhängen, Sondersignale und teilen dies der Steuerung 230 der Teilnehmerschaltung 200 mit. Im Fall des Rufs wird das Leitungspaar 251 und 252 mittels der Schalter 215a und 215b an die Rufwechselspannung 222 geschaltet.

Bekannt ist, durch Umpolen des Leitungspaares 251 und 252 mittels einer eingebauten oder in die Verbindung von der Teilnehmerschaltung 200 zum Teilnehmerendgerät 100 eingebauten Umschalters das über eine Diode angeschaltete Anzeigeelement ( 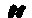 Message-Lamp") 181 leuchten zu lassen.

Wird demgegenüber erfindungagemäß das Rufsignal moduliert, kann im Rufsignal eine codierte Meldung zum Teilnehmerendgerät 100 übertragen werden. Durch eine Rufsignalauswertung wird diese codierte Meldung im Rufsignal detektiert, und das Vorliegen dieser Meldung über das Anzeigeelement ( 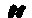 Message-Lamp") 181 zur Anzeige gebracht.

Anstelle der Modulation des Rufsignals mit einer codierten Meldung kann erfindungsgemäß durch eine Rufsignalauswertung detektiert werden, ob der Ruf innerhalb einer vorgegebenen Zeit angenommen wurde, z.B. durch Abheben des Handapparates. Ist dies nicht der Fall, wird eine Meldung generiert, die dann über das Anzeigeelement 181 zur Anzeige gebracht wird.

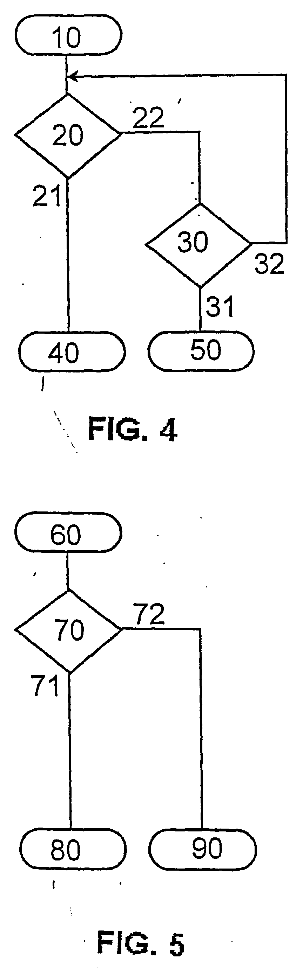

Zur Rufsignalauswertung ist gemäß Figur 3 in der Apparatesteuerung 160 des Teilnehmerendgerätes 100 der Rufdetektor 161 vorgesehen. Übliche Fernsprechapparte bewerten das Rufsignal nach Amplitude, Frequenz und Zahl der übertragenen Halbwellen der Rufspannung, was in der Apparatesteuerung 160 ausgewertet wird. Bei Vorliegen einer im Rufsignal codierten Meldung aktiviert der Rufdetektor 161 über die Funktionssteuerung 162 die 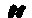 Message-Lamp" 181. Bei der Alternativlösung generiert die Funktionssteuerung 162 in Zusammenwirken mit dem Rufsignaldetektor 161 selbst eine Meldung, die zur Anzeige gebracht wird, wenn - wie in Figur 4 schematisch dargestellt - ein Ruf [10] ansteht und keine [22] Annahme des Rufs, z.B. durch Abheben [20] des Handapparates, erfolgt, sowie eine vorgegebene Rufzeit 30 abgelaufen [31] ist. Der Meldungsanzeigenzustand ist in Figur 4 mit dem Bezugszeichen 50 bezeichnet. Solange die vorgegebene Rufzeit 30 nicht abgelaufen [32] ist, wird der Gabelumschalter 110 weiter abgefragt, und innerhalb der Überwachungszeit bei Erkennen 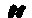 Abheben des Handapparates" während der Rufphase 21 in den Gesprächszustand 40 geschaltet.

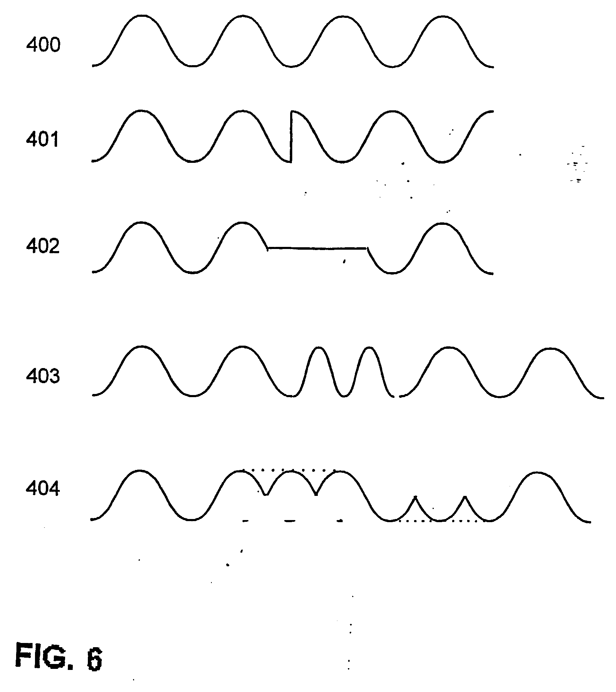

Wenn gemäß Figur 5 im Ruhezustand 60 der Handapparat 20 abgehoben wird [70] und die Meldungsanzeige 181 aktiviert ist [71], wird vorzugsweise eine vorprogrammierte Rufnummer automatisch gewählt (Rufweiterschaltung) [80], andernfalls [72] kann vom Teilnehmer eine beliebige Rufnummer gewählt werden. Die automatische Wahl einer vorprogrammierten Rufnummer bei aktivierter Meldungsanzeige hat den Vorteil, daß z.B. die Rezeption bei einer Hotelanlage den Ruf entgegennehmen kann und nach Bedarf eine Nachricht hinterlegen kann, die dem Teilnehmerendgerät 100 bei Abheben des Handapparates zugeleitet wird. Die vorprogrammierte Rufnummer setzt sich vorteilhafterweise aus der zu rufenden Teilnehmernummer und einer Zusatznummer zusammen, womit beim gerufenen Teilnehmer angezeigt wird, daß eine Beantwortung einer Meldung vorliegt.

Die Meldungsanzeige kann durch Abheben des Handapparates vom Teilnehmerendgrät 100 aus oder von der Vermittlungsanlage 201 aus durch einen Sonderruf (vom Normalruf abweichender Rufrhythmus) oder durch kurzfristige Speisestromunterbrechung durch die Teilnehmerschaltung 200 deaktiviert werden. Bei der Deaktivierung einer Meldungsanzeige von der Vermittlungsanlage 201 aus ergibt sich der Vorteil, daß z.B. in einer Hotelanlage beim Auschecken eines Gastes alle Meldungen gelöscht werden und ein neuer Gast nicht mit Meldungen belästigt wird, die nicht für ihn bestimmt sind. Natürlich können auch mehrere vorgenannte Varianten zur Deaktivierung einer Meldungsanzeige unabhängig voneinander vorgesehen sein.

Das Teilnehmerendgerät 100 wird auch im Ruhezustand mit reduzierter Energie mittels der Stromversorgung 130 versorgt, um die Steuerung in einem verminderten Leistungsaufnahmemodus funktionsfähig zu halten oder im Fall der 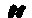 Message-Lamp" 181 diese zu betreiben. Die 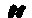 Message-Lamp" 181 kann eine Leuchtdiode sein, die über spezielle Blinkrhythmen weniger Energie benötigt, oder eine LCD 180, womit mehrere Informationen oder Klartext angezeigt werden können. Die Leuchtdiode ist kostengünstig, läßt sich direkt vom Apparateprozessor ansteuern und ist auffallend, besonders wenn als Message-Indikator ein blinkender Zustand ausgewählt wird. Als Nachteil ist der relativ hohe Stromverbrauch anzusehen, der sich zum Stromverbrauch der Apparatesteuerung addiert, so daß an die Belegungskennungskriterien der Teilnehmerschaltung besondere Anforderungen gestellt werden. Der auffälligere blinkende Message-Zustand ist vorzuziehen, da dann im Mittel weniger Strom benötigt wird. Das LCD-Display kann als einfache Anzeigefläche ausgelegt sein oder im bereits vorhandenen LCD-Display des Fernsprechapparates als Message-Element vorgesehen sein. Vorteilhaft ist der sehr geringe Stromverbrauch. Im Fall einer LCD 180 wird diese auch für den Telefoniermodus vorteilhafterweise mitbenutzt durch, z.B. Anzeige der gerufenen Rufnummer oder Klartext der Servicenummern. Im Fall eines Rufs gelangt die Rufenergie über den Gabelumschalter 110 und den Kondensator 120 zur Stromversorgung 130 und an den hochohmigen Eingang der Apparatesteuerung 160. Der Rufdetektor 161 als Bestandteil der Apparatesteuerung 160 ist dafür ausgelegt, den Ruf gemäß Toleranzschema zu erkennen und einen Lautsprecher, z.B. die Hörkapsel 151, anzusteuern, des weiteren die im Rufsignal enthaltenen Meldungen - bei einer Mehrfachmodulation sind mehrere Meldungen in einem Rufsignal vorgesehen - zu decodieren und die entsprechenden Maßnahmen, wie 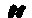 Message-Lamp" 181 Ein/Aus zu veranlassen. Bei Mehrfachmodulation müssen je nach Art der Meldungen voneinander unterscheidbare Anzeigen erfolgen, wie z.B. unterscheidbarer Blinkrythmus oder unterschiedliche Textdarstellungen im LCD-Display, das vorzugsweise zur erhöhten Aufmerksamkeit im Blinkzustand betrieben wird.

Wenn die 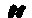 Message-Lamp" 181 des Teilnehmerendgerätes 100 durch einen besonderen Rufrhythmus aktiviert oder auch deaktiviert werden soll - Modulation des Rufsignals gemäß Figur 6 - wird der durch die Steuerung 230 der Teilnehmerschaltung 200 gesteuerte Kontakt 215 entsprechend zeitlich betätigt. Beim Austasten von Halbwellen 402 oder bestimmten Teilen (Phasenanschnitte) des Rufsignals betätigt die Steuerung 230 von der Rufspannung 222, deren Verlauf in Figur 6 mit 400 bezeichnet ist, synchronisiert die Kontakte 221a und 221b. Die Synchronisation erfolgt entweder zentral über die Steuerungseinrichtung 270 der Vermittlungsanlage 201 oder über einen an der Rufspannung angeschlossenen Nulldurchgangs- oder Phasendetektor 220. Wenn der Kontakt 221 als Umachalter ausgelegt ist, kann damit ein Phasensprung 401 erzeugt werden oder auch bei mehrmaligen Phasensprüngen eine quasi Frequenzverdopplung 403 erzeugt werden, wobei Filter zur Dämpfung der Oberwellen der scharfen Flanken zusätzlich zu den glättenden Eigenschaften der Anschlußleitung 251, 252 sinnvoll sind. Auch eine Halbierung der Frequenz 404 ist durch geeignetes Schalten der Kontakte 221 möglich.

Das Rufsignal läßt sich so modulieren, daß über die Umschaltekontakte 221 gegebenenfalls in Verbindung mit dem Kontaktpaar 215 mehrere Meldungen (Daten) zum Teilnehmerendgerät 100 gesendet werden können.

Das Teilnehmerendgerät 100 wird auch im Ruhezustand mit reduzierter Energie mittels der Stromversorgung 130 versorgt, um die Steuerung in einem verminderten Leistungsaufnahmemodus funktionsfähig zu halten oder im Fall der 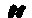 Message-Lamp" 181 diese zu betreiben.

Zur Ergänzung werden die für den Telefonbetrieb notwendigen Funktionseinheiten des Teilnehmerendgerätes 100 anschließend kurz beschrieben. Im Gesprächszustand schaltet der Gabelumschalter 110 die Anschlußleitung 251 auf die Stromversorgung 130 um, wo nun mehr Energie aus der Leitung entnommen werden kann. Beim Wählen wird bei Impulswahl die Stromversorgung 130 den Pulsen entsprechend hochohmig geschaltet, während der Sprechkreis 150 über das Schaltglied 140 abgetrennt wird. Bei MFV kann das Schaltglied 140, welches auch im Sprechkreis 150 oder in der Stromversorgung 130 integriert sein kann, ein MFV-Sender sein. Der Sprechkreis 150 ist für den richtigen Leitungsabschluß, die Dämpfungseinstellungen und die Gabelschaltung für Hörkapsel 151 und Mikrofon 152 zuständig. Mittels der Tastatur 170 wird gewählt.

Wenn für die 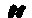 Message-Lamp" 181 mehr Energie als der Ruhestromverbrauch des Fernsprechapparates benötigt wird, kann dies in der Teilnehmerschaltung 200 berücksichtigt werden, da dort dieser Zustand bekannt ist, und die Ansprechschwelle für das Erkennen des Abhebens erhöht wird.

Für die Variante mit Generierung von Meldungen nach Ablauf einer vorgegebenen Rufzeit ohne daß der Ruf angenommen wurde, gilt die Bedingung, daß keine Durchwahlverbindung geschaltet ist.

## Patentansprüche

1. Verfahren zur Anzeige von Meldungen bei mindestens einem an einer Vermittlungsanlage (201) betreibbaren Teilnehmerendgerät (100) mit folgenden Schritten:
- das Rufsignal wird insbesondere in der Teilnehmerschaltung (200) der Vermittlungsanlage (201) moduliert, um zumindest eine codierte Meldung im Rufsignal zu übertragen,
- durch eine Rufsignalauswertung wird die Meldung detektiert (161) und im Teilnehmerendgerät (100) das Vorliegen der Meldung zur Anzeige (181) gebracht.

2. Verfahren zur Anzeige von Meldungen bei mindestens einem an einer Vermittlungsanlage (201) betreibbaren Teilnehmerendgerät (100) mit folgenden Schritten:
- durch eine Rufsignalauswertung (161) wird detektiert, ob der Ruf innerhalb einer vorgegebenen Zeit angenommen wurde,
- bei nicht angenommenem Ruf innerhalb der vorgegebenen Zeit wird eine Meldung generiert und im Teilnehmerendgerät (100) zur Anzeige (181) gebracht.

3. Verfahren nach Anspruch 1 oder 2, dadurch gekennzeichnet, daß für die Anzeige einer Meldung als Anzeigeelement (181) eine Leuchtdiode oder ein Anzeigendisplay des Teilnehmerendgerätes (100) verwendet wird.

4. Verfahren nach einem der Ansprüche 1 bis 3, dadurch gekennzeichnet, daß für die Anzeige einer Meldung ein Anzeigeelement (181) periodisch Ein/Aus gesteuert wird (Blinkzustand).

5. Verfahren nach einem der Ansprüche 1 bis 4, dadurch gekennzeichnet, daß eine aktivierte Meldungsanzeige vom Teilnehmerendgerät (100) aus, beispielsweise durch Abheben des Handapparates, oder von der Vermittlungsanlage (201) aus, beispielsweise durch einen Sonderruf oder durch eine kurzfristige Speisestromunterbrechung, deaktiviert wird.

6. Verfahren nach einem der Ansprüche 1 bis 5, dadurch gekennzeichnet, daß im Fall aktivierter Meldungsanzeige und Abheben des Handapparates automatisch eine vorprogrammierte Rufnummer gewählt wird.

7. Verfahren nach Anspruch 6, dadurch gekennzeichnet, daß die vorprogrammierte Rufnummer aus der zu rufenden Teilnehmernummer und einer Zusatznummer zusammengesetzt wird, um beim gerufenen Teilnehmer anzuzeigen, daß die Beantwortung einer Meldung vorliegt.

8. Verfahren nach einem der Ansprüche 1 bis 7, dadurch gekennzeichnet, daß bei aktivierter Meldungsanzeige eine Rufweiterschaltung zu einer Servicestelle zur dortigen Abfrage des Rufes und gegebenenfalls zur Hinterlegung einer Nachricht weitergeleitet wird.

9. Verfahren nach einem der Ansprüche 2 bis 8, dadurch gekennzeichnet, daß eine Meldung nur dann generiert wird, wenn keine Durchwahlverbindung zum Teilnehmerendgerät (100) mit Anzeigenelement (181) aufgebaut wird.

10. Verfahren nach einem der Ansprüche 1 oder 3 bis 8, dadurch gekennzeichnet, daß zur Modulation des Rufsignals ein besonderer Rufrhythmus erzeugt wird oder Teile des Rufsignals, insbesondere Halbwellen oder Phasenanschnitte, ausgetastet werden.

11. Verfahren nach Anspruch 10, dadurch gekennzeichnet, daß eine Mehrfachmodulation des Rufsignals für unterschiedliche Arten von Meldungen durchgeführt wird, und daß das Anzeigenelement (181) je nach Art der Meldung voneinander unterscheidbare Anzeigen liefert.

12. Verfahren nach einem der Ansprüche 1 bis 11, dadurch gekennzeichnet, daß für die Anzeige der Meldungen bei Anzeigeneinrichtungen (181) mit erhöhtem Stromverbrauch eine entsprechende Ruhestromanpassung bezüglich der Teilnehmereinrichtung (200) und bezüglich der Ansprechschwelle bei der Rufsignalauswertung (161) vorgesehen wird.

13. Anordnung zur Anzeige von Meldungen bei mindestens einem an einer Vermittlungsanlage (201) betreibbaren Teilnehmerendgerät (100) mit folgenden Merkmalen:
- das Teilnehmerendgerät (100) weist eine Rufsignalauswertung (161) auf,
- die Rufsignalauswertung (161) steht in Wirkverbindung mit einem Anzeigenelement (181) zur Anzeige von Meldungen, die durch Modulation des Rufsignals in codierter Form im Rufsignal enthalten sind, oder generierbar sind, wenn der Ruf nicht innerhalb einer vorgegebenen Zeit angenommen wird.

14. Anordnung nach Anspruch 13, dadurch gekennzeichnet, daß Kontakte (215a, 215b) in der Teilnehmerschaltung (200) der Vermittlungsanlage (201), welche das Rufsignal auf die Leitungsadern (251, 252) zum Teilnehmerendgerät (100) führen, zeitlich in einem besonderen Rhythmus, der mindestens einer Meldung entspricht, von einer Steuereinheit (230) der Teilnehmerschaltung (200) steuerbar sind.

15. Anordnung nach Anspruch 14, dadurch gekennzeichnet, daß insbesondere zum Austasten von Halbwellen oder Teilen des Rufsignals eine Synchronsteuerung der Kontakte (215a, 215b) von einer zentralen Steuerung (270) der Vermittlungsanlage (201) aus oder über einen Nulldurchgang- oder Phasendetektor (220) für das Rufsignal vorgesehen ist.

16. Anordnung nach einem der Ansprüche 13 bis 15, dadurch gekennzeichnet, daß zur Stromversorgung des Anzeigenelements (181) für die Meldungsanzeige eine für das Teilnehmerendgerät (100) eigene Stromversorgung (130) vorgesehen ist.
